# EUROPÄISCHE PATENTSCHRIFT

(11) **EP 0 393 244 B1**
(45) Veröffentlichungstag und Bekanntmachung des Hinweises auf die Patenterteilung: **20.07.1994**
(21) Anmeldenummer: 89120831.6
(22) Anmeldetag: 10.11.1989
(51) Int. Cl.: G02C 5/22

(54) **Brillenfassung mit einer gegen Lösen gesicherten Schraubverbindung**
Spectacle frame with a screw connection secured against unscrewing
Monture de lunettes avec une connexion à vis assurée contre le desserrage

(30) Priorität: 17.04.1989 DE 8904802 U
(43) Veröffentlichungstag der Anmeldung: 24.10.1990
(73) Patentinhaber: OBE-Werk Ohnmacht & Baumgärtner GmbH & Co. KG, 75228 Ispringen (DE)
(72) Erfinder:
(74) Vertreter: Gleiss & Grosse

(56) Entgegenhaltungen:
- EP-A- 0 249 571
- EP-A- 0 255 508
- DE-A- 894 918
- DE-A- 3 335 046
- FR-A- 948 198
- FR-A- 1 573 291
- US-A- 2 833 325
- US-A- 4 076 394

## Beschreibung

Die Erfindung bezieht sich auf eine Brillenfassung mit einer gegen Lösen gesicherten Schraubverbindung für Fassungsteile, insbesondere Scharnierteilen.

Man kennt für solche Zwecke sogenannte Gangregulierungen aus Kunststoff, z.B. nach DE-PS 23 56 818, welche jedoch bei Lötarbeiten an dem Brillenscharnier zuvor entnommen und danach wieder eingesetzt werden müssen. Man hat danach auch schon Schraubausführungen mit Sicherungen ganz aus Metall verwendet, z.B. nach DE-GM 86 26 588 und der AT-PS 386 486, diese sind jedoch mit Gegenmuttern versehen, d.h. zweiteilig, welche im letzten Falle über zwei Gelenkaugen konisch ausgebildet sind und hierbei infolge Paßungenauigkeiten leicht zum Verklemmen neigen. Desweiteren ist es nach der DE-PS 89 49 18 bei Kleinscharnieren bekannt, den Schraubenkopf und dessen Aufnahme im Fassungsteil aufeinander abgestimmt konisch auszubilden. Hierbei kommt es vorallem bei kräftigem Anzug zu nur wieder schwer lösbarer Verbindung, wobei in der Regel der Schraubenkopf im Schlitzbereich beschädigt wird, sodaß eine Wiederverwendung ausgeschlossen ist.

Es ist nun Aufgabe der Erfindung hier eine einteilige Metallschrauben-Ausführung zu schaffen, welche nicht zum eigenen Festfressen und zum Verklemmen der gegenläufigen Gelenkaugen führt und überdies keinen Kunststoffeinsatz benötigt, d.h. bei Lötarbeiten eingebaut bleiben kann.

Diese Aufgabe wird gemäß der Erfindung dadurch gelöst, daß Brillenfassungen mit einer gegen Lösen gesicherten Schraubverbindung für Fassungsteile, insbesondere Scharnierteilen nach dem Oberbegriff des Anspruchs 1 diese sich dadurch kennzeichnen, daß in einem Fassungsteil bei einem Konuswinkel zwischen 20° bis 40°, insbesondere 30° mit anschließendem Freiwinkel bei eingeschraubtem Schraubenkopf ein Differenzwinkel zwischen Schraubenkopf und Aufnahme von 1° bis 3° vorgesehen ist. Hierdurch wird bei starkem Schraubenanzug einerseits eine Selbstlösung infolge hoher Reibung und andererseits auch zu starke Flächenpressung der Scharnieraugen vermieden, sodaß bei sicherer Gelenkfunktion auch eine gegen Lösen gesicherte Schraubverbindung erreicht wird. Hierbei ist sowohl die Zugbelastung der Gewinde gering als auch die Druckverteilung der durch axialen Anzug erzeugten, geringen Flächenpressung der Scharnierlaufflächen gleichmäßig. Insbesondere entstehen durch die differenten Winkel zwischen Konuskopf und Konusaufnahme im äußeren Bereich der Aufnahme wesentlich höhere Kräfte als im inneren Bereich, wodurch im Außenbereich eine Druckspannung entsteht, die eine günstigere Kräfteverteilung auf den Laufflächen des Scharniers bewirkt.

Weitere Einzelheiten der erfindungsgemäßen Ausführung der gegen Lösen gesicherten Schraubverbindung für Brillenfassungen sind in der Zeichnung an Hand eines bevorzugten Ausführungsbeispiels dargestellt und nachfolgend beschrieben und zwar zeigen:

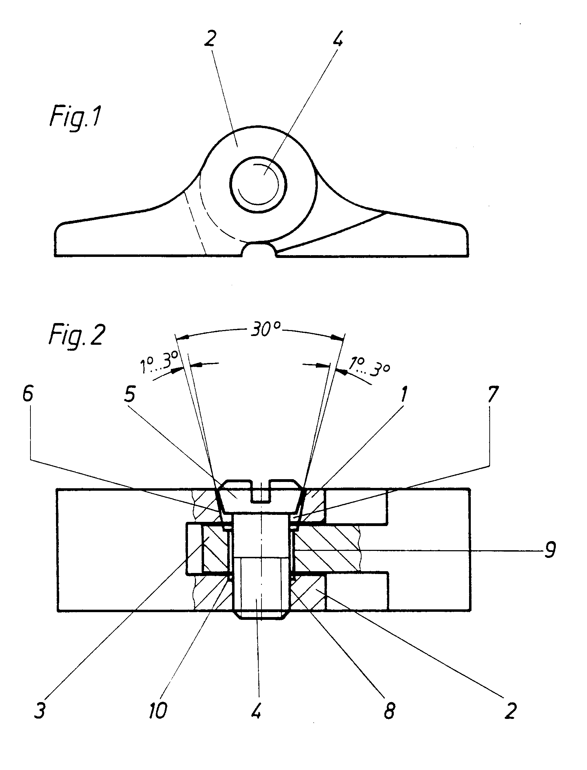

- Figur 1: die Seitenansicht eines neuen Brillenscharniers und
- Figur 2: den Querschnitt zu Figur 1.

Wie aus der Zeichnung ersichtlich ist, wird das dargestellte dreiteilige Brillenscharnier gebildet durch die beiden äußeren Scharnieraugen 1 und 2 als Bügelteil- oder Mittelscharnier mit dem mittleren Scharnierauge 3 als Mittelteil- oder Bügelteilscharnier.

Die Scharnierschraube mit Schraubbolzen 4 besitzt einen konischen Schraubenkopf 5, welcher mit einem Konuswinkel zwischen 20° und 40°, hier dem bevorzugten Winkel von 30° bei einer entsprechenden gegenkonischen Aufnahme 6 mit einem Differenzwinkel von 1° bis 3° zwischen Schraubenkopf 5 und Aufnahme 6 versehen ist.

Beim gezeigten Ausführungsbeispiel ist die Aufnahme 6 im äußeren Scharnierauge 1 als schlanke konische Bohrung mit anschließendem Freiwinkel 7 bei eingebrachter Scharnierschraube mit Schraubbolzen 4 und konischem Schraubenkopf 5 vorgesehen.
Im äußeren Scharnierauge 2 ist die Gewindebohrung 8 für die Scharnierschraube mit Schraubbolzen 4 vorgesehen und im mittleren Scharnierauge 3 ist bei eingebrachtem Schraubbolzen 4 ein Freischnitt 9 in Form einer Durchgangsbohrung vorgesehen, welch letzterer bei 10 in die Gewindebohrung 8 des zweiten äußeren Scharnierauges 2 einläuft.

Durch die Anordnung wird ein starker Schraubenanzug ermöglicht, welcher einer Selbstlösung durch hohe Konusreibung unter Vermeidung einer zu hohen Flächenpressung der Scharnieraugen entgegenwirkt. Anstelle des hier dargestellten dreiteiligen Brillenscharniers läßt sich diese Konusschraube auch entsprechend für fünfteilige Brillenscharniere verwenden. Auch ist eine Anwendung allgemein bei Brillenfassungen mit einer gegen Lösen zu sichernden Schraubverbindung, wie bei Schließblöcken, mit Vorteil möglich.

## Patentansprüche

1. Brillenfassung mit einer gegen Lösen gesicherten Schraubverbindung für Fassungsteile, insbesondere für Scharnierteile, welche eine einen konischen Schraubenkopf (5) und einen Schraubenbolzen (4) umfassende Schraube, eine auf einer Seite des Fassungsteils vorgesehene konisch ausgebildeten Schraubenkopf-Aufnahme (6) und ein auf der anderen Seite des Fassungsteils vorgesehenes Schraubgewinde aufweist, **dadurch gekennzeichnet**, daß der Konuswinkel des Schraubenkopfs (5) zwischen 20° und 40° liegt, vorzugsweise 30° beträgt, und daß der Konuswinkel der Schraubenkopf-Aufnahme (6) so gewählt ist, daß sich bei eingeschraubtem Schraubenkopf zur Vermeidung einer zu hohen Zugbelastung des Gewindes ein Differenzwinkel zwischen Schraubenkopf (5) und Aufnahme (6) von 1° bis 3° ergibt.

2. Brillenfassung nach Anspruch 1, **dadurch gekennzeichnet**, daß der Konuswinkel der Aufnahme (6) kleiner ist als der Konuswinkel des Schraubenkopfs (5).

3. Brillenfassung nach Anspruch 1 oder 2, **dadurch gekennzeichnet**, daß das Brillenscharnier dreiteilig ausgebildet ist und zwei äußere Scharnieraugen (1, 2) und ein zwischen diesen angeordnetes mittleres Scharnierauge (3) aufweist, daß in einem der äußeren Scharnieraugen (1) die Schraubenkopf-Aufnahme (6) und im zweiten äußeren Scharnierauge (2) eine Gewindebohrung (8) und daß in dem mittleren Scharnierauge (3) eine Durchgangsbohrung (9) vorgesehen sind.

4. Brillenfassung nach Anspruch 2, **dadurch gekennzeichnet**, daß sich der durch den Differenzwinkel ergebende Freiraum zwischen dem Schraubenkopf (5) und der Schraubenkopf-Aufnahme (6) vom ersten äußeren Scharnierauge (1) in die Durchgangsbohrung (9) im mittleren Scharnierauge (3) fortsetzt, und daß sich die Durchgangsbohrung (9) bis zur Gewindebohrung (8) des zweiten äußeren Scharnierauges (2) fortsetzt.

5. Brillenfassung nach einem der Ansprüche 1 bis 4, **dadurch gekennzeichnet**, daß die Höhe des Schraubenkopfs (5) etwa die Hälfte bis zwei Drittel der Höhe der Schraubenkopf-Aufnahme (6) ausmacht.

## Claims

1. A spectacle frame having for frame parts, in particular for hinge parts, a screw connection secured against unscrewing, which screw connection has a screw comprising a tapering screw head (5) and a screw shank (4), has a screw-head receiver (6) which is tapered and is provided on one side of the frame part, and has a screw thread provided on the other side of the frame part, characterised in that the cone angle of the screw head (5) lies between 20° and 40°, is preferably 30°, and in that the cone angle of the screw-head receiver (6) is selected in such a manner that when the screw head is screwed in, there results a differential angle from 1° to 3° between screw head (5) and receiver (6) so as to prevent the thread from being subjected to too great a tensile load.

2. A spectacle frame in accordance with Claim 1, characterised in that the cone angle of the receiver (6) is smaller than the cone angle of the screw head (5).

3. A spectacle frame in accordance with Claim 1 or 2, characterised in that the spectacle hinge is in three parts and has two outer gudgeons (1, 2) and a middle gudgeon (3) arranged therebetween, in that the screw-head receiver (6) is provided in one of the outer gudgeons (1) and a tapped bore (8) is provided in the second outer gudgeon (2), and in that a through bore (9) is provided in the middle gudgeon (3).

4. A spectacle frame in accordance with Claim 2, characterised in that the clearance between the screw head (5) and the screw-head receiver (6), resulting due to the differential angle, continues from the first outer gudgeon (1) into the through bore (9) in the middle gudgeon (3), and in that the through bore (9) continues to the tapped bore (8) of the second outer gudgeon (2).

5. A spectacle frame in accordance with any one of Claims 1 to 4, characterised in that the height of the screw head (5) is approximately half to two-thirds of the height of the screw-head receiver (6).

## Revendications

1. Monture de lunettes avec un assemblage par vis indesserrable pour des éléments de monture, en particulier des éléments de charniéres, qui présente une vis comprenant une tête de vis (5) conique et un boulon fileté (4), un logement (6) conique pour la tête de vis prévu sur l'un des côtés de l'élément de monture, et un filetage prévu sur l'autre côté de l'élément de monture, **caractérisée en ce** que l'angle de cône de la tête de vis (5) est de 20° à 40°, de préférence de 30°, et que l'angle de cône du logement (6) de la tête de vis est choisi de telle sorte que, lorsque la tête de vis est insérée, on obtient entre la tête de vis (5) et le logement (6) un angle différentiel de 1° à 3° pour éviter une charge de traction trop importante pour le filetage.

2. Monture de lunettes selon la revendication 1, caractérisée en ce que l'angle de cône du logement (6) est plus petit que l'angle de cône de la tête de vis (5).

3. Monture de lunettes selon l'une des revendications 1 ou 2, caractérisée en ce que la charnière de lunettes est réalisée en trois parties et comporte deux oeils de charnière extérieurs (1, 2) et un oeil de charnière central (3) disposé entre ces derniers, que dans l'un des oeils de charnière extérieurs (1) est prévu le logement (6) pour la tête de vis, alors que le second oeil de charnière extérieur (2) comporte un taraudage (8), et que l'oeil de charnière central (3) présente un trou de passage (9).

4. Monture de lunettes selon la revendication 2, caractérisée en ce que l'espace libre créé par l'angle différentiel entre la tête de vis (5) et le logement (6) pour la tête de vis se prolonge du premier oeil de charnière extérieur (1) dans le trou de passage (9) dans l'oeil de charnière central (3), et que de trou de passage (9) s'étend jusqu'au taraudage (8) du second oeil de charnière extérieure (2).

5. Monture de lunettes selon l'une des revendications 1 à 4, caractérisée en ce que la hauteur de la tête de vis (5) représente sensiblement la moitié à deux tiers de la hauteur du logement (6) de la tête de vis.
